# EUROPEAN PATENT APPLICATION

(11) **EP 2 389 035 A1**
(43) Date of publication of application: **23.11.2011**
(21) Application number: 10843666.8
(22) Date of filing: 22.01.2010
(51) Int. Cl.: H04W 48/08

(54) **HOME BASE STATION-BASED ACCESS MODE PROCESSING METHOD**

(71) Applicant: ZTE Corporation, Shenzhen, Guangdong 518057 (CN)
(72) Inventor: LI, Lanlan, Shenzhen Guangdong 518057 (CN); WANG, Jing, Shenzhen Guangdong 518057 (CN)
(74) Representative: Raunecker, Klaus Peter
(86) International application number: PCT/CN2010/070334
(87) International publication number: WO 2011/088623

(57) **Abstract**

This invention discloses a processing method for access mode based on an HNB/HeNB, wherein the method includes, establishing a stream control transmission protocol connection between the HNB/HeNB and a core network; and notifying, by the HNB/HeNB, the core network of the access mode information of the HNB/HeNB, wherein the access mode information indicates an access mode of the HNB/HeNB. This invention effectively improves network performances and user expenences.

## Description

### TECHNICAL FIELD

The present invention relates to the field of communications, and particularly, to a processing method for access mode based on a Home Node B (HNB)/ Home Evolved Node B (HeNB).

### BACKGROUND

A home Node B is a small, low-power cellular base station, and it is mainly applied to indoor locations such as home and offices. The home Node B, which serves as a supplement to indoor coverage of a cellular network, can provide a user with voice and data services. In addition, the home Node B not only can be used separately but also can be integrated into a home gateway to serve as a part of the home network, and has characteristics such as low costs, plug-and-play support, broadband-based access and low power.

Depending on different interfaces provided, the home Node B can access into a 3rd Generation (3G) digital communication system or a Long Term Evolution (LTE) network structure.

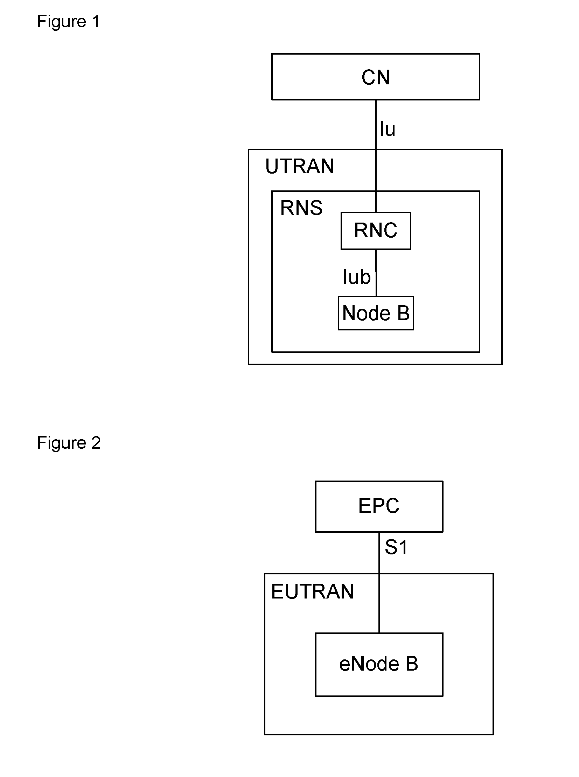

Figure 1 is a block diagram illustrating a network structure of a 3G communication system in the related art. As shown in Figure 1, a 3G network structure includes a Universal Terrestrial Radio Access Network (UTRAN) and a Core Network (CN). Specifically, the UTRAN includes a Radio Network Subsystem (RNS), and the RNS includes a base station (i.e. Node B) and a Radio Network Controller (RNC), wherein the Node B is connected with the RNC via an lub interface, and the UTRAN is connected with the CN via an lu interface.

Figure 2 is a block diagram illustrating the network structure of an LTE system in the related art. As shown in Figure 2, in an LTE network structure, a core network (i.e. an Evolved Packet Core, EPC) and an Evolved UTRAN (eUTRAN) are included. Specifically, the eUTRAN includes a base station (i.e. Evolved Node B, eNode B), and the eNode B is connected with the EPC via an S1 interface.

Typically, in such communication systems, in order to facilitate managing an HNB (also called HeNB (Home Evolved Node B) in the LTE system) and reduce an influence on the core network, a radio access network of the home Node B system has introduced a Home (e)Node B Gateway (H(e)NB GW, called HeNB GW in the LTE system).

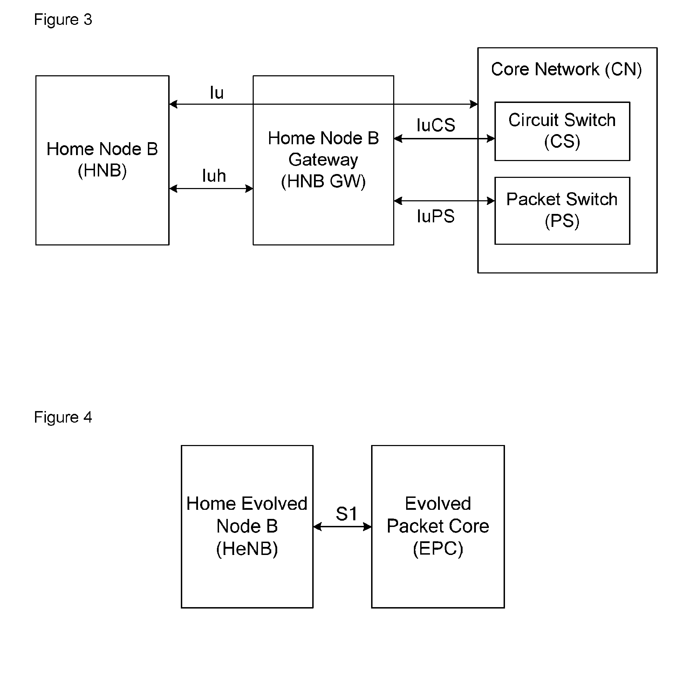

Figure 3 is a block diagram illustrating the network structure of a home Node B in the 3G communication system according to the related art. As shown in Figure 3, the HNB GW is connected with the core network, and the HNB is connected with the HNB GW via an luh interface. The interface for the radio access network and the core network inherits the interface for a macro base station and the core network, i.e. to be the identical interface lu. That is, the HNB is connected with the core network via the lu interface. The HNB GW is connected to a Circuit Switch (CS) of the core network via an luCS interface, and to a Packet Switch (PS) of the core network via an luPS interface.

Figure 4 is a block diagram illustrating a first network structure mode of the home Node B in the LTE system according to the related art. As shown in Figure 4, in this structure mode, the Home Node B (HeNB) and the Evolved Packet Core (EPC) are directly connected via an S1 interface.

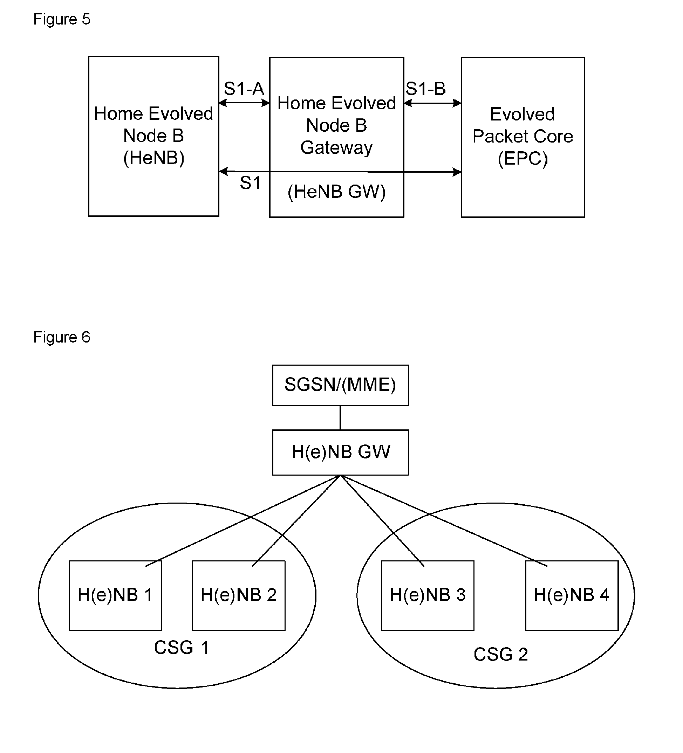

Figure 5 is a block diagram illustrating a second network structure mode of the home Node B in the LTE system according to the related art. As shown in Figure 5, in this structure mode, the Home Node B (HeNB) is connected with the Evolved Packet Core (EPC) through the Home Node B Gateway (HeNB GW). Specifically, the interface between the Home Node B (HeNB) and the Home Node B Gateway (HeNB GW) is an S1-MME interface, and the interface between the Home Node B Gateway (HeNB GW) and a Mobility Management Entity (MME) is also called an S1-MME interface. In order to make a distinction, as shown in Figure 5, the interface between the HeNB and the HeNB GW is denoted as an S1-A interface, the interface between the HeNB GW and the MME is called an S1-B interface, and the interface between the HeNB and the Evolved Packet Core (EPC) is an S1 interface.

Based on the home Node B in the above-described system structure, the 3rd Generation Partnership Project (3GPP) standardization organization has proposed a Closed Subscriber Group (CSG). To be specific, the closed subscriber group is a logic concept, and a closed subscriber group can typically be constituted by a family or an enterprise. Specifically, the CSG may be applied in both a 3G network and an LTE network, and in the LTE network, the CSG is applied no matter an HeNB GW is arranged or not. Figure 6 is a schematic diagram illustrating a relationship between a home Node B and a closed subscriber group according to the related art. A closed subscriber group can be provided with service by one or more HNBs. In addition, each CSG has its own identifier. All of the HNBs providing service for one CSG employ a single CSG ID. As shown in Figure 6, an H(e)NB 1 and an H(e)NB 2 are included in a CSG 1, and an H(e)NB 3 and an an H(e)NB 4 are included in a CSG 2.

Typically, high-layer protocol modules which are not associated to radio access can be collectively called Non-Access Stratum (NAS). The NAS is presented in User Equipment (UE) and the Core Network (CN), and mainly includes functions of service-associated processing. Radio Access Network Application Part (RANAP)/S1 Application Protocols (S1AP) are signaling procedure specifications associated to the access network of the lu (S1) interface.

In a call service, the UE needs to send an "attach request" message of the non-access stratum to the CN during accessing the CN via the access network, so as to establish a logic connection between the CN and the UE service node. In order to implement access control for the UE, after receiving the attach request message, the home Node B may encapsulate the message in an "initial UE message" of the S1/lu interface to send to the CN, and identifier information of the CSG to which the home Node B belongs is also included in the "initial UE message". A CSG identifier list of the CSGs allowing the UE to access is stored at the CN side. If the CSG ID information included by the initial UE message is in the CSG identifier list of the CSG accessed by the UE, the UE is allowed to access the CN.

On the other hand, when the CN pages the UE having access through the home Node B, it can execute paging optimization. The CN finds the belonged home Node B Gateway according to the "list of the CSGs allowing the UE to access", and sends the "list of the CSGs allowing the UE to access" to the home Node B gateway. The home Node B gateway sends a paging message to a CSG cell in the list.

At present, a method for the access network to acquire the CSG ID of the home Node B is as follows: in a 3G home Node B system, the home Node B reports the CSG ID to the home Node B gateway through a registration message; in an LTE home Node B system, the home Node B reports the CSG identifier of itself to the mobility management entity and the home Node B gateway (in the case where a home Node B gateway exists in the home Node B system structure) by a establish message at the S1 interface. When the CSG identifier is changed, the home Node B notifies the mobility management entity or the home Node B gateway of a new CSG identifier through a base station configuration update message.

Three access modes for a home Node B cell have been proposed in the latest home Node B service requirements. The 3GPP standardization organization proposes that in order to facilitate access control and billing management, three access modes have been defined for the home Node B cell, i.e. a closed access mode, a mixed access mode, and an open access mode.

In an actual application, the user can be registered as a CSG user, and when a home Node B is in the closed access mode, only registered users of the CSG to which the home Node B belongs can access the home Node B and receive the service provided by the home Node B. If a home Node B is in the open access mode, any UE, including the UE being not registered as a CSG user, can access the home Node B. The home Node B in the mixed access mode has combined the characteristics of the home Node Bs in the closed access mode and the open access mode, and a UE can access the home Node B in the mixed access mode no matter the UE is registered as an user of the CSG to which the home Node B belongs or not.

According to the existing access control procedure, the CN may acquire the CSG identifier, but the CN cannot achieve the access control for the UE merely according to the CSG identifier. If a home Node B belongs to a CSG of the mixed access type, when a UE access the base station, the CN should allow the UE to access the home Node B even if no or wrong CSG identifier is included in the initial UE message of the base station. However, since the CN has not acquired the CSG access mode of the home Node B, it cannot achieve the access control process for the UE correctly and merely according to the CSG ID.

Moreover, when the access mode of the home Node B is changed, the CN should also acquire the new type of the H(e)NB access mode timely. In the prior art, when the CSG ID of HeNB in the LTE is changed, the CN is notified through a configuration update message of the S1 interface. However, when the CSG access type of the HeNB is changed, the CN cannot acquire such a change.

With respect to a problem of the UE access control error resulted from the CN being unable to acquire the access mode of the home Node B, an effective solution has not been proposed at present.

### SUMMARY

The present invention is proposed in consideration of the problems of the UE access control error resulted from a core network being unable to acquire an access mode of an HNB/HeNB as well as the implementation for the paging. Thus, a main objective of the present invention is to provide a processing method for access mode based on an HNB/HeNB, so as to solve at least one of the above-described problems.

According to an aspect of the present invention, a processing method for access mode based on a home Node B (HNB) / Home Evolved Node B (HeNB) is provided.

The processing method for access mode based on an HNB/HeNB comprises: establishing a Stream Control Transmission Protocol (SCTP) connection between the HNB/HeNB and a core network; and notifying, by the HNB/HeNB, the core network of access mode information of the HNB/HeNB, wherein the access mode information indicates an access mode of the HNB/HeNB.

Preferably, when the access mode of the HNB/HeNB is changed, the HNB/HeNB notifies the core network of the updated access mode information.

Specifically, the HNB/HeNB and the core network may be directly connected to each other; and the step of notifying, by the HNB/HeNB, the core network of the access mode information may comprise: sending, by the HNB/HeNB, a UE associated message or a Non-UE associated message including the access mode information directly to the core network.

Specifically, the HNB/HeNB and the core network may be connected to each other through an HNB/HeNB gateway to which the HNB/HeNB belongs; and the step of notifying, by the HNB/HeNB, the core network of the access mode information may comprise: forwarding, by the HNB/HeNB, a UE associated message including the access mode information to the core network through the HNB/HeNB; or sending, by the HNB/HeNB, a Non-UE associated message including the access mode information to the HNB/HeNB gateway.

Specifically, the HNB/HeNB and the core network may be directly connected to each other and the access mode of the HNB/HeNB may be changed; and the step of notifying, by the HNB/HeNB, the core network of the updated access mode information may comprise: the updated access mode information is included in a configuration update message and is sent to the core network by the HNB/HeNB.

Specifically, the HNB/HeNB and the core network may be connected through the HNB/HeNB gateway, and the access mode of the HNB/HeNB maybe changed; and the step of notifying, by the HNB/HeNB, the core network of the updated access mode information of the HNB/HeNB may comprise: sending, by the HNB/HeNB, the configuration update message including updated access mode information to the HNB/HeNB gateway.

Preferably, the UE associated message may comprise one of an initial UE message; and the Non-UE associated message may comprise an S1 setup message.

Specifically, the access mode information of the HNB/HeNB may be used for indicating at least one of a closed access mode, a mixed access mode, and an open access mode; to be specific, when the HNB/HeNB notifies the core network of the access mode information of the HNB/HeNB, the access mode information may be typically used for indicating an access mode.

By means of at least one above-described technical solutions of the present invention, the access mode information of the HNB/HeNB is notified to the core network or the HNB/HeNB gateway by the HNB/HeNB, so that the core network or the HNB/HeNB gateway can acquire the access mode of the HNB/HeNB timely, which avoids the problem of terminal access error and effectively improves network performances and enhances user experiences.

### BRIEF DESCRIPTION OF THE DRAWINGS

The accompanying drawings seek to provide further understanding for the present invention and form a part of the specification, and aim at explain the present invention in combination with embodiments of the present invention and are in no way intended to limit the present invention. In the accompanying drawings:
Figure 1 is a block diagram illustrating a network structure of a 3G communication system in the related art;
Figure 2 is a block diagram illustrating the network structure of an LTE system in the related art;
Figure 3 is a block diagram illustrating the network structure of a home Node B in the 3G communication system according to the related art;
Figure 4 is a block diagram illustrating a first network structure mode of the home Node B in the LTE system according to the related art;
Figure 5 is a block diagram illustrating a second network structure mode of the home Node B in the LTE system according to the related art;
Figure 6 is a schematic diagram illustrating a relationship between a home Node B and a closed subscriber group according to the related art;
Figure 7 is a flowchart illustrating a processing method for access mode based on the HNB/HeNB according to a method embodiment of the present invention;
Figure 8 is a signaling flowchart illustrating a processing example 1 of the processing method for access mode based on the HeNB according to the method embodiment of the present invention;
Figure 9 is a signaling flowchart illustrating a processing example 2 of the processing method for access mode based on the HeNB according to the method embodiment of the present invention;
Figure 10 is a signaling flowchart illustrating a processing example 3 of the processing method for access mode based on the HeNB according to the method embodiment of the present invention;
Figure 11 is a signaling flowchart illustrating a processing example 4 of the processing method for access mode based on the HeNB according to the method embodiment of the present invention; and
Figure 12 is a signaling flowchart illustrating a processing example 5 of the processing method for access mode based on the HeNB according to the method embodiment of the present invention.

### DETAILED DESCRIPTION

### Function Overview

At present, since the UE can access any CSG cell in the mixed access mode and the open access mode, the UE of a non-CSG user can access a core network through a home Node B in the open access mode. However, the CSG ID of the CSG to which the home Node B belongs is not in the "list of CSGs allowing access". Therefore, the UE cannot be paged correctly and merely according to the "list of CSGs allowing access", which may lead to the problem of UE access error resulted from the core network being unable to acquire the access mode of the home Node B.

Based on the above description, it can be found that both the home Node B gateway and the core network need to know the access mode of the home Node B. Therefore, the present invention has proposed a solution that the home Node B notifies access mode information of the home Node B to the home Node B gateway and the core network through a message between the home Node B itself and the core network or the home Node B gateway. Further, at present, when the home Node B is connected with the core network through the home Node B gateway, the home Node B gateway needs to know the CSG ID of the home Node B, and when the home Node B is directly connected with the core network, the core network needs to know the CSG ID of the home Node B. Similarly, when the home Node B is connected with the core network through the home Node B gateway, the home Node B gateway needs to know the access mode of the home Node B, and when the home Node B is directly connected with the core network, the core network needs to know the access mode of the home Node B. With the technical solution of the present invention, the core network and the home Node B gateway can acquire the access mode of the home Node B timely, which avoids the problem of UE access error.

Without a conflict, the embodiments and features in the embodiments in this application can be combined with each other.

Hereinafter, the present invention will be described in detail in combination with the accompanying drawings.

### Method Embodiment

In this embodiment, a processing method for access mode based on home Node B is provided.

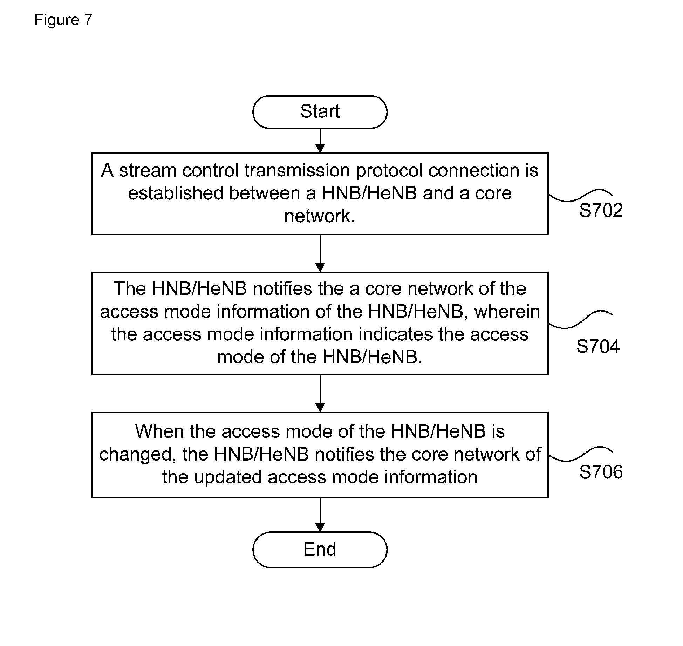

Figure 7 is a flowchart illustrating a processing method for access mode based on the HNB/HeNB according to an embodiment of the present invention. It should be noted that in order to facilitate description, the technical solution of the method embodiment of the present invention is described and shown as steps in Figure 7. The steps shown in Figure 7 can be executed, for example, in a computer system with a group of computer executable instructions. Although a logic sequence is shown in Figure 7, the steps being described and shown can be executed in a different sequence in some circumstances. As shown in Figure 7, the method includes steps as follows (Steps S702 to S706).

S702: A stream control transmission protocol connection is established between an HNB/HeNB and a core network.

S704: The HNB/HeNB notifies the core network of access mode information of the HNB/HeNB, wherein the access mode information indicates access mode of the

HNB/HeNB.

S706: when the access mode of the HNB/HeNB is changed, the HNB/HeNB notifies the core network of the updated access mode information.

With the embodiment, the core network can acquire the access mode of the HNB/HeNB timely, which avoids the problem of terminal access error and effectively improves network performances and user experiences.

The HNB/HeNB notifies the core network the core network of the access mode information:
Based on whether the HNB/HeNB and the core network are connected through the HNB/HeNB gateway, a specific way of notifying the access mode information to the core network or the HNB/HeNB gateway is determined.

On one hand, in the case that the HNB/HeNB and the core network are directly connected, the HNB/HeNB directly sends a UE associated message or a Non-UE associated message including the access mode information to the core network, so that the core network acquires the access mode of the HNB/HeNB. Preferably, the above-mentioned UE associated message may comprise one of a UE initializing message and an S1 setup message; and the Non-UE associated message may comprise an S1 setup message.

On the other hand, in the case that the HNB/HeNB and the core network are connected through the HNB/HeNB gateway to which the HNB/HeNB belongs, the HNB/HeNB may forward a UE associated message including the access mode information to the core network through the HNB/HeNB gateway, or the HNB/HeNB may also send a Non-UE associated message including the access mode information to the HNB/HeNB gateway, so that the HNB/HeNB gateway acquires the access mode information of the HNB/HeNB. Thus, the CN acquires the access mode of the HNB/HeNB.

The HNB/HeNB notifies the core network of the updated access mode information:
After the access mode of the HNB/HeNB is updated, the HNB/HeNB may notify the updated access mode to the core network.

On one hand, in the case that the HNB/HeNB and the CN are directly connected, the HNB/HeNB may have the updated access mode information included in a configuration update message to send to the core network, so that the core network acquires the access mode of the HNB/HeNB, wherein the configuration update message may be a base-station configuration update message.

On the other hand, in the case that the HNB/HeNB and the core network are connected through the HNB/HeNB gateway, the HNB/HeNB may send a configuration update message including the updated access mode information to the HNB/HeNB gateway, so that the HNB/HeNB gateway acquires the updated access mode information of the HNB/HeNB. Thus, the core network acquires the updated access mode of the HNB/HeNB.

With the above-described processing, the core network or the HNB/HeNB gateway can acquire the access mode of the HNB/HeNB timely, which avoids the problem of UE access error and effectively improves network performances and user experiences.

Hereinafter, specific examples based on particular application scenarios will described in detail in combination with the accompanying drawings.

### Example 1

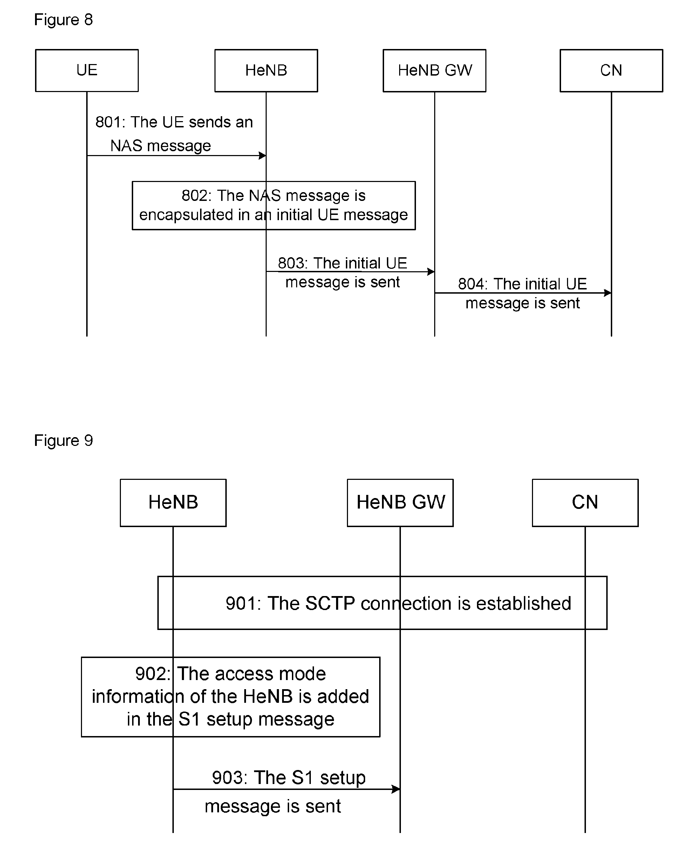

In this example, it is described that the HNB/HeNB reports the access mode information of the HNB/HeNB to the core network. The specific processing process is applicable to the network structure that the HeNB in the LTE is connected with the CN through the HeNB GW As shown in Figure 8, the processing of this example specifically includes steps as follows.

801: The UE sends an NAS message to the CN, wherein the message is forwarded by the base station.

802: The HeNB encapsulates the received NAS message in an initial UE message, and has an access mode cell (i.e. the access mode information described above) of the home Node B included in the initial UE message, wherein the access mode cell is used to represent the access mode of the home Node B.

803: The HeNB sends the initial UE message to the HeNB GW.

804: The HeNB GW receives the initial UE message, and sends the initial UE message to the core network. Thus, the CN can acquire the access mode of the home Node B, so as to perform subsequent access control processing.

The processing of this example is also applicable to the circumstance that a 3G HNB is connected with a core network through an HNB GW in the 3G communication system, wherein it is only required to replace the HeNB by the HNB and replace the HeNB GW by the HNB GW The specific processing process is identical to the processing shown in Figure 8.

With this example, it is described that the home Node B reports the access mode information of the home Node B to the core network through the initial UE message. The specific processing process is applicable to the network structure that the LTE HeNB is connected with the CN through the HeNB GW

### Example 2

In this example, it is described the processing process that the HNB/HeNB reports the access type to the core network. The processing is applicable to the network structure that the HeNB in the LTE is connected with the CN through the HeNB GW As shown in Figure 9, the processing of this example specifically includes steps as follows.

901: The SCTP connection is established among the HeNB, the HeNB GW and the core network.

902: The HeNB adds the home Node B access mode information of the HeNB in the S1 setup message, wherein the access mode cell is used to indicate the access mode of the home Node B.

903: The HeNB sends the S1 setup message to the home Node B gateway, thus the home Node B gateway can acquire the access mode of the home Node B, so as to perform subsequent access control processing.

The processing of this example is also applicable to the circumstance that a 3G HNB is connected with a core network through an HNB GW in the 3G communication system, wherein it is only required to replace the HeNB by the HNB and replace the HeNB GW by the HNB GW, and to have the employed message be a UE registration message. The specific processing process is identical to the processing shown in Figure 9.

With this example, it is described the processing process that the home Node B reports the access type to the core network by sending the S1 setup message to the home Node B gateway. The processing is applicable to the network structure that the HeNB in the LTE is connected with the CN through the HeNB GW

### Example 3

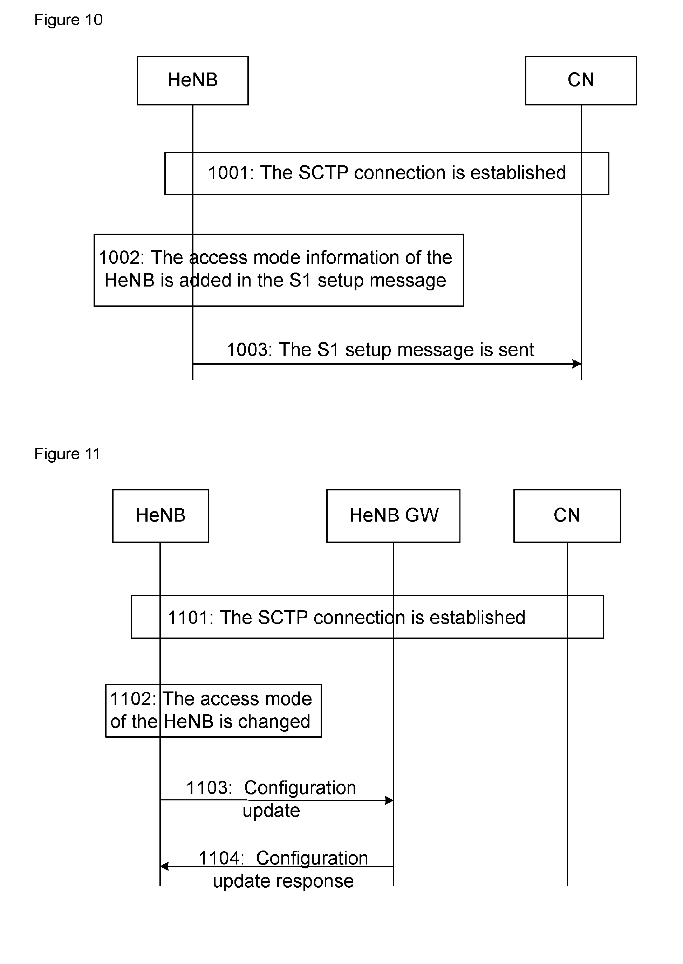

In this example, it is described the processing process that the HNB/HeNB reports the access type to the core network. The processing is applicable to the network structure that the HeNB in the LTE is directly connected with the CN. As shown in Figure 10, the processing of this example specifically includes steps as follows.

1001: The SCTP connection is established between the HeNB and the core network.

1002: The HeNB adds the home Node B access mode information of the HeNB in the S1 setup message (i.e. the above-described S1 interface signaling is also called the S1 setup message), wherein the access mode cell is used to indicate the access mode of the home Node B.

1003: The HeNB sends the S1 setup (i.e. S1 setup message) to the core network, thus a network element of the core network can acquire the access mode of the HeNB, so as to perform subsequent access control processing.

With this example, it is described the processing process that the home Node B reports the access type to the core network by sending the S1 setup message to the core network. The processing is applicable to the network structure that the LTE HeNB is directly connected with the core network.

### Example 4

In this example, it is described the processing process that when the access mode of the HNB/HeNB is changed, the access type is reported to the HNB/HeNB GW The processing is applicable to the network structure that the HeNB in the LTE is connected with the core network through the HeNB GW. As shown in Figure 11, the processing of this example specifically includes steps as follows.

1101: The SCTP connection is established among the HeNB, the HeNB GW and the core network.

1102: The access mode of the HeNB is changed.

1103: The HeNB sends a base station configuration update message to the HeNB GW, wherein new access mode information of the HeNB is included in the base station configuration update message.

1104: The HeNB GW sends a configuration update response message to the HeNB; thus, the HeNB GW can acquire the updated access mode of the HeNB, so as to perform a subsequent processing operation.

The processing of this example is also applicable to the circumstance that a 3G HNB is connected with a core network through an HNB GW in the 3G communication system, wherein it is only required to replace the HeNB by the HNB and replace the HeNB GW by the HNB GW, and to have the employed message be a UE registration message. The specific processing process is identical to the processing shown in Figure 9.

With this example, it is described the processing process that when the access mode of the HeNB is changed, the HeNB reports the access type to the core network by sending the base station configuration update message to the HeNB GW The processing is applicable to the network structure that the HeNB in the LTE is connected with the core network through the HeNB GW

### Example 5

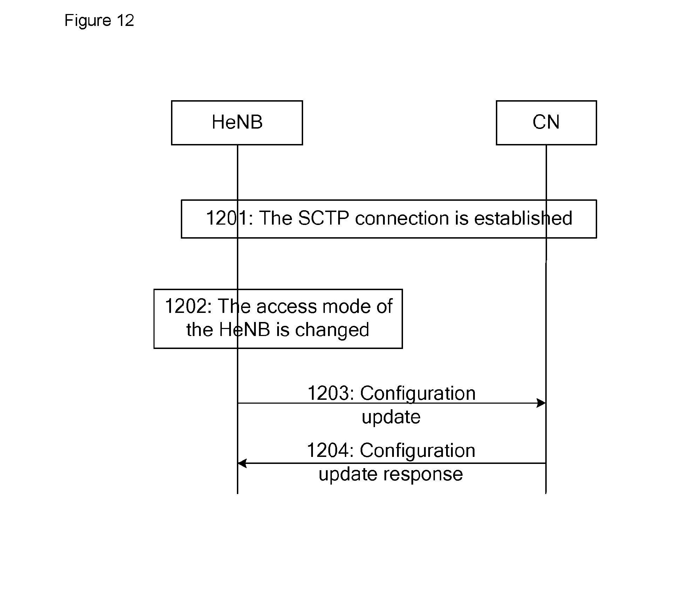

In this example, it is described the processing process that when the access mode of the HNB/HeNB is changed, the access type is reported to the core network. The processing is applicable to the network structure that the HeNB in the LTE is directly connected with the core network. As shown in Figure 12, the processing of this example specifically includes steps as follows.

1201: CSTP connection is established between the HeNB and the core network.

1202: The access mode of the HeNB is changed.

1203: The HeNB sends a base station configuration update message to the core network, wherein new access mode information of the HeNB is included in the base station configuration update message.

1204: The core network sends a configuration update response message to the HeNB, thus, the core network can acquire the updated access mode of the HeNB, so as to perform a subsequent processing operation.

With this example, it is described the processing process that when the access mode of the HeNB is changed, the HeNB reports the access type to the core network by sending the base station configuration update message to the core network. The processing is applicable to the network structure that the HeNB in the LTE is directly connected with the core network.

It should be noted that in the embodiments of the present invention, only the initial UE message in the UE associated message and the S1 setup message in the Non-UE associated message are taken as an example for description, but the present invention is not limited thereto, and the scope of the present invention also encompasses implementing the solution of the present invention using other UE associated messages and Non-UE associated messages.

As described in the above, by means of the access mode processing method based on the HNB/HeNB provided by the present invention, the access mode information of the HNB/HeNB is notified to the core network or the HNB/HeNB gateway by theHNB/HeNB, so that the core network or the HNB/HeNB gateway can acquire the access mode of the HNB/HeNB timely (especially when the access mode of the HNB/HeNB is changed), which avoids the problem of the UE access error and effectively improves network performances and user experiences.

The foregoing is merely preferred embodiments of the present invention, and are in no way intended to limit the present invention. For those skilled in the art, there can be various variations and changes for the present invention. Any modifications, equivalents, improvements and the like made within the spirit and principle of the present invention should be construed as falling into the scope of the present invention.

## Claims

1. A processing method for access mode based on a Home Node B (HNB)/ Home Evolved Node B (HeNB), comprising:
establishing a stream control transmission protocol connection between the HNB/HeNB and a core network; and
notifying, by the HNB/HeNB, the core network of access mode information of the HNB/HeNB, wherein the access mode information indicates an access mode of the HNB/HeNB.

2. The method according to claim 1, wherein when the access mode of the HNB/HeNB is changed, the HNB/HeNB notifies the core network of updated access mode information.

3. The method according to claim 1, wherein the HNB/HeNB and the core network are directly connected to each other; and the step of notifying, by the HNB/HeNB, the core network of the access mode information of the HNB/HeNB comprises:
sending, by the HNB/HeNB, a User Equipment (UE) associated message or a Non-UE associated message including the access mode information directly to the core network.

4. The method according to claim 1, wherein the HNB/HeNB and the core network are connected to each other through an HNB/HeNB gateway to which the HNB/HeNB belongs; and the step of notifying, by the HNB/HeNB, the core network of the access mode information of the HNB/HeNB comprises:
forwarding, by the HNB/HeNB, a UE associated message including the access mode information to the core network through the HNB/HeNB gateway; or sending, by the HNB/HeNB, a Non-UE associated message including the access mode information to the HNB/HeNB gateway.

5. The method according to claim 3 or 4, wherein the access mode of the HNB/HeNB is changed; and
the step of notifying, by the HNB/HeNB, the core network of the access mode information of the HNB/HeNB further comprises:
the updated access mode information is included in a configuration update message and is sent to the core network by the HNB/HeNB.

6. The method according to claim 3 or 4, wherein the UE associated message is an initial UE message.

7. The method according to claim 3 or 4, wherein the Non-UE associated message is an S1 setup message.

8. The method according to claim 1, wherein the access mode information of the HNB/HeNB is used for indicating at least one of a closed access mode, a mixed access mode, and an open access mode.
